(19) Europäisches Patentamt
European Patent Office
Office européen des brevets

(11) Publication number: **0 405 960 A2**

(12) **EUROPEAN PATENT APPLICATION**

(21) Application number: **90307064.7**

(51) Int. Cl.$^5$: **G06F 15/72**

(22) Date of filing: **28.06.90**

(30) Priority: **29.06.89 JP 165199/89**
**08.03.90 JP 54845/90**

(43) Date of publication of application:
**02.01.91 Bulletin 91/01**

(84) Designated Contracting States:
**DE FR GB**

(71) Applicant: **Oki Electric Industry Company, Limited**
**7-12, Toranomon 1-chome Minato-ku**
**Tokyo 105(JP)**

(72) Inventor: **Tamura, Seiji, c/o Oki Electric Industry Co., Ltd.**
**7-12 Toranomon 1-cóme**
**Minato-ku, Tokyo(JP)**

(74) Representative: **Read, Matthew Charles et al**
**Venner Shipley & Co. 368 City Roadoad**
**London EC1V 2QA(GB)**

(54) **A calculating system and method for pattern data rotation.**

(57) A method of and a system for pattern data rotation in which a work pattern (step S1) is analysed to determine a pattern periodicity therein that will permit the pattern to be replicated continouously upon rotation through a particular angle, a work pattern is formed (step S2) suitable for use at the particular angle of rotation, and the rotated pattern is then painted (step S3) onto a figure so that it is covered by the continuous rotated pattern.

EP 0 405 960 A2

# A CALCULATING SYSTEM AND METHOD FOR PATTERN DATA ROTATION

The present invention relates to a pattern data calculating system for pasting a figure on a digital data display apparatus.

It is known to provide a digital computer with a software program for pasting the whole inside area of appointed figure displayed on digital display apparatus controlled by the computer. The computer has at least one set of data, which produce a small cell of a continuous pattern on the digital display apparatus. Figure 16 shows an example of of the pattern cells, cell 101 and cell 102. In the Figure 16 cell 101 and cell 102 are applied to paste inside the figure 103 and 104. In this case, it is clear that each of the cells 101 and 102 are too small to paste inside the figure 103 and the figure 104. In this case, a plurality of the cells 101 and the cells 102 are arranged to cover the interior of the figure continuously. Then, the pattern is cut along the edge of the figure, and erased outside the figure. The figure is pasted in this way.

In order to achieve this arrangement, it is an important point to design pattern cells so that each cell joins with the next to make a continuous pattern in every direction. Thus, as shown in Figure 18, the pattern of cell 101a and cell 101b should be designed so that a fragment 111 and a fragment 112 make the same pattern as a block 113, when the cell 101a and cell 101b are arranged together. Accordingly, cell 101a and cell 101c, cell 101b and cell 101d should make the same arrangement.

It is known to provide the computer with a software program so that the figure 103 or the figure 104 can be rotated on the digital display but it has a serious associated problem when the figure is already pasted with the arrangement of pattern cells. The problem is described as follows:

In many cases the pattern is requested to rotate with the figure. In order to carry out the rotation of pattern, many of the prior software programs arrange that the pasting pattern follow the rotation of the figure. However in another case, the operator may want the pattern to follow the rotation. One imaginable reason for this is that the operator wants to emphasise the identity of the original figure and rotated figure with the pattern. In order to apply for this request, the cells should each be rotated.

In this case, the problem is that the continuity of the pattern cannot be assured on the edge of the cell. Figure 17 shows the example of the problem As shown in the Figure 17, 30 degree rotation of the pattern prevents the pattern from making a continuous pattern.

In this case, one should pay attention that the edge of the cell is recut after the rotation. This recut allows each cell to settle on the same position, after the rotation. But at the same time, this recut causes a discontinuity in the pattern, because the new edge made after the recut is not necessarily parallel or rectangular to the former edge before rotation.

Thus, it is a difficult problem to avoid such a discontinuity in the pattern, especially if the rotation is not right-angled, or some amount of right-angled rotation.

This discontinuity is substantially a function of a dimension of the cell, In each cell, the pattern has a certain periodicity. So the dimension of the cell should be the same, or a magnification by an integral number, in order to avoid the discontinuity. But the dimension of the cell cannot be directed so as to conform to this limitation when the cell is rotated. This is because the pattern itself rotates and the edge of the cell does not follow the rotation. So a suitable dimension of the cell for the periodicity varies for the pattern upon rotation of the cell.

To solve this problem and avoid such a discontinuity, a method to make a continuous pattern by piling the cells partly, is widely known. But this method demands a large scale of graphic calculation and thus is not suitable for a high speed graphic system.

It is, therefore, an object of this invention to provide a pattern calculating method which enables rotation of pasted figure.

It is another object of this invention to provide a pattern calculating method which enables high speed pattern pasting.

In accordance with this invention, the computer or processor calculates suitable dimension of the pattern cells according to the rotation of the pattern cells, then shifts the cells to the position where each cell attaches another, so as to keep the continuity of the pattern.

In the present invention, a destination area may be defined which has the width that assures the continuity of the rotated pattern. Then, a new cell is formed. This new cell has the least dimension with which the new cell includes the former cell, and has the pattern made by the rotation of former pattern. Next, the new cell is applied for the figure which is to be pasted.

In order that the invention may be more fully understood an embodiment thereof and a method of performance of the same will now be described by way of example with reference to the accompanying drawings in which:

Figure 1 is a flow chart that shows the outline of a suitable embodiment of this invention;

Figure 2 is a supplemental figure of Figure 1, that shows the suitable dimension of the rotated cell, according to the rotation;

Figure 3 is a flow chart that shows the process to find the width of the destination area, shown as the first step in Figure 1;

Figure 4 shows the image of the destination area and new cells;

Figure 5 shows an arrangement of the new cells;

Figure 6 is a flow chart that shows the process to make a new cell that has the rotated pattern;

Figure 7 shows th4e image of the process described in Figure 6;

Figure 8 us a flow chart that shows the process to paste the figure with the new cell;

Fig.9 shows the image of the process that is described in Fig.8.

Fig.10 is a flow chart that shows the outline of another suitable embodiment of this invention.

Fig.14 is a flow chart that shows the process to paste the figure,according to the second embodiment.

Fig.15 shows the image of the process that is described in Fig.14.

Fig.11 is a flow chart that shows the calculation to carry out the process described in Fig.14.

Fig.12 shows an imaginable table of parameters used for the process described in Fig.14.

Fig.13 is a flow chart that shows the process to seek the parameters necessary for the calculation described in Fig.10.

Fig.16 shows some prior exsamples of pasting a figure with a cell which contains the pattern.

Fig.17 shows a prior example and another example of the rotation of the figure painted with stripe pattern.

Fig.18 shows an arrangement of the cells.

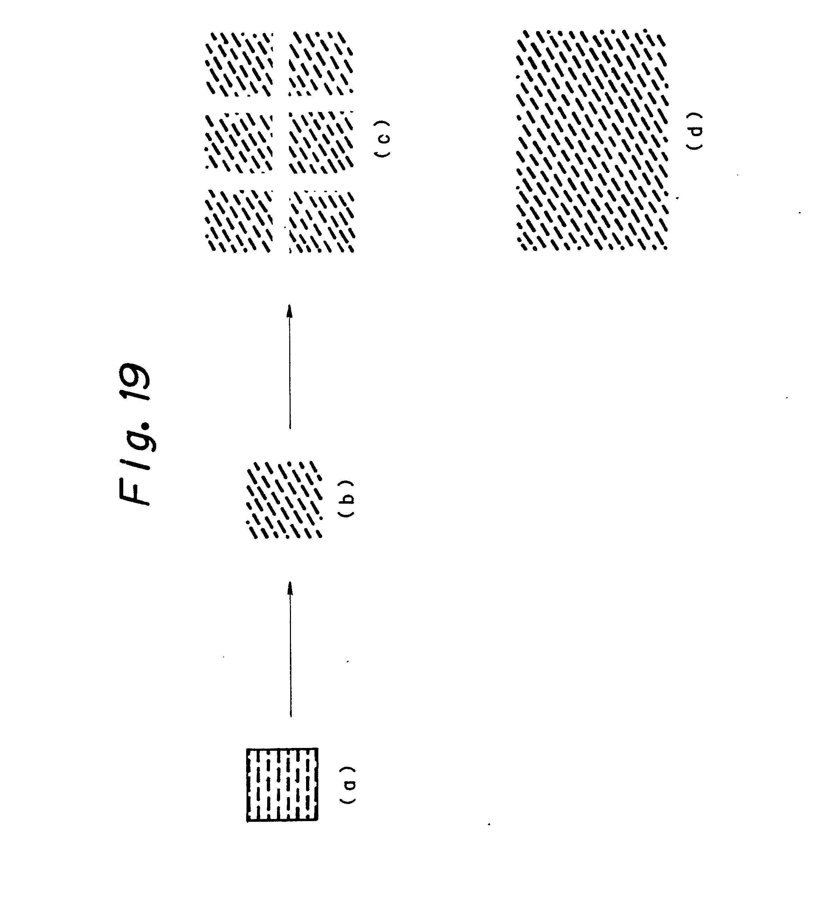

Fig.19 shows some examples of images which are the general views of the arrangements with rotation of the cells shown in Fig.18.

An example of the suitable embodiment is described as follows:

As briefly shown in Fig.1,the most important calculations is formed with three steps; step S1, step S2,and step S3.

Step S1 intends to find a suitable dimension of the new cell which is to be formed later.In this invention, the suitable dimension means a dimension of the cell which corresponds to the periodicity of the pattern.

Step S2 intends to make a work pattern.In this invention,a work pattern means a fragment of the rotated pattern which fills the new cell of new dimension defined in step S1.

Step S3 intends to make a pattern which forms a new pattern which will be applied to paste the figure.

Now, the calculating method in each pattern is described in detail,by each steps.

Fig.2 shows an example of the relation between a cell and the suitable dimension.In the Fig.2,the former cell 1 has the dimension of n length, and the pattern of the formercell 1 has a periodicity with the n length.In other words,the former cell 1 keeps a continuity of pattern with an adjucent former cell 1.N length is a necessary condition tocarry out the periodicity.

And,as shown,the suitable dimension is still n after 90 degree rotation, as indicated as a cell 2,while suitable dimension is $\sqrt{2n}$ after 45 degree rotation,as indicated as a cell 3.Generally,the suitable dimension will be found as a quotient of the dimension of the former cell 1 by cosine of the rotation degree,for example,the 45 degree or 90 degree rotation.As for the example,those 45 degree or 90 degree.As for those examples,it is clear that cosine of 90 degree is 1 while cosine of 45 degree is $1/(\sqrt{}2)$.

Fig.3 shows eight steps from step S11 to step S18, the calculation steps to find the suitable dimension.

Step S11 finds two parameters,rl and g.The rl indicates the suitable dimension,while the g indicates the product of dimension of the former cell 1 and sine of the rotation degree.Fig.4(a) shows the visual image of the g.A square pattern in the left shows the former cell 1.Root square 11 in the right indicates the outline of the former cell 1,after rotation of $\theta'$.A circumferential square 13,circumscribing the root square 11,has the dimension of rl.As is indicated in this Fig.4(a),g is also defined as a horizontal difference between the former cell 12-4 positioned at the left bottom of the circumferential square13,and the left bottom edge of the root square 11.

Step S12 finds another parameter,approximate value $\theta'$ .This approximate value $\theta'$ does not equal the rotation degree $\theta$ ,in a strict sense. It is another parameter defined by tan (g/(rl-g-1)).This approximate value $\theta'$ is requested because the former cell is not inscribed,after rotation,in a square of the rl.So,rotation degree $\theta$ has to be approximated by $\theta'$ ,so as to inscribe the former cell in a new cell of rl.

Step S13 finds two parameters,horizontal augmentation x and vertical initial value y.Said vertical initial value y is defined to keep the continuity of the pattern between the first circumferential square 13-1,which is indicated with solid lines in Fig.4(b)-,and the second circumferentials quare 13-2,which is indicated with dotted lines in the same Fig.4(b)-.Both parameters are concerned with continuity of the pattern.The first cumferential square 13-1 and the second circumferential square 13-2 shifted by horizontal augmentation x and vertical initial value y makes a continued pattern.

Actually,the two parameters are determined by the following equations;$x = rl-g-1, y = g+1$.

Objectively, see a former cell 12a positioned just above the origin (0,0).this former cell 12a is originally positioned so as to keep continuity of the pattern between other former cells (not shown) included in the square 13-1,because the former cell 12a cooperates to a 12-3 of Fig.4(a),concerned with the square 13-1.Moreover,the former cell 12a is also positioned so as to keep continuity of the pattern between other former cells (not shown) included in the square 13-2,because the former cell 12a cooperates to a 12-3 of Fig.4(a),concerned with the square 13-1.

Step S14 also finds two parameters;periodical pattern length cl and height h.Both are the length with which the pattern shows periodicity,in horizontal and vertical direction.Fig.4 also shows the visual images of them.Parameter cl shows a periodicity of the position of the former cell 12.A former cell is positioned at the same height after the period of cl in horizontal length, and alsopositioned at the same deviation from the vertical axis after the period of h in vertical length.

Step S15 compares height h with vertical initial value y.If they are equal, suitable dimension is found.If not,in step S16,height h is compared with the suitable dimension of the circumferential square rl.If height h is larger than the suitable dimension rl,height h is changed to $h+rl-1$,and periodical pattern length of cl changed to $cl-x+g$.If height h is not larger than the suitable dimension rl,step S17 is ignored.Then, in step S18,periodical pattern length cl is recalculated as $cl+x$;height h as $h+g$.

Fig.5 shows another visual image of Fig.3.Said root square 11s are applied so as to paint out a certain figure (not shown),and circumferential square 13s are arranged so as to keep continuity of the pattern.

Fig.6 shows four steps from step S21 to step S24 for making work pattern.

Step S21 finds a square area of dimension cl .This area is called work pattern D.This work pattern D is next rotated by approximate value $\theta'$.

Step S22 finds another square area of dimension rl.This area is called circumferential square S.This circumferential squsre S circumscribes the work pattern D.

Step S23 applies the former cell 11 to the center portion of the circumferential square S.

Step S24 rotates the circumferential square S.

Fig.7 shows the visual images of fig.6.The pattern is shown in Fig.7(a),inside the root square 11.A work pattern D of dimension cl as shown in Fig.7(b) is rotated by $\theta'$,counterclockwise,then circumferential square S of $rl'$ which circumscribes the work pattern D after rotation of $\theta'$ is formed,as shown in Fig.7(c). Next,the pattern shown in Fig.7(a) pastes the square S as shown in Fig.7(d).And,the square S with the pattern is rotated as shown in Fig. 7(f).

Fig.8 shows the flow chart of calculation to paste the predetermined figure with a pattern formed by the square S.

Step S31 finds a work pattern.This work pattern D is found as 21 in Fig.7(f).

Step S32 forms a square destination area of dimension cl,this destination area is found as a big square in Fig.9.As described in the explanation of step S14,this destination area shows horizontal periodical length of the pattern,cl.

Step S33 determins the origin of two coordinates; (Dx,Dy) and (Sx,Sy).Both are determined as (0,0).the first (Dx,Dy) defines the position of new cell of $rl'$ ,while the second (Sx,Sy) defines the position of the former cell of cl.

Step S34 applies the first work pattern to the predetermined area inside the figure.The first work pattern is applied to the right of X axis, and below the Y axis.

The work pattern is also positioned as left upper angle put upon the origin.The position shown as No.1 in figure 9.

Step S35 renews the point of the origins (Dx,Dy) and (Sx,Sy) ,in order to apply another work pattern.

Then,step S36 checks whether the renewed Dx is included inside the work pattern,because adjuscent work patterns should be overlapped, so as to avoid making a slit between the work patterns.If the renewed Dx was located inside the work pattern, step S37 repeats the same process as step S34,and step S38 changes Dx and Sy.So,Next work pattern is located to the right upper position of the firstwork pattern.Then, step S36 checks whether the renewed Dx isincluded inside the work pattern again.As shown in Fig.8, three steps from step S36 to step S38 makes a roop.This roop applies four work patterns,shown as 2,3,4 and 5 shown in Fig.8.

After pasting with the fifth work pattern 5,as shown in Fig.9,origin (Dx,Dy) is out of the destination area.This indicates that the work pattern is now completely out of the destination area.So,other calculation steps are necessary,to arrange work patterns below the five work patterns.

In order to arrange more work patterns below,step S39 changes (Dx,Dy) and (Sx,Sy) so as to settle the work patternin the position shown as 6 in Fig.9.The n,step S40 and step S41 does the same process as step S34 and step S35,then,step S42,step S43 and step S44 makes the same roop as the step S37,step S38 and step S36.In this roop of step S42,step S43 and step S44,step S43 is different from step S35,in that step S43 changes (Dx,Dy) and does not change (Sx,Sy).Changeof (Sx,Sy) is not necessary because step S42,step S43 and step S44 assures the continuity of the pattern.In step S35,step S38,and step S41,change of (Sx,Sy) is necessary in order to assure the continuity of the pattern,between one certain work pattern and another work pattern positioned below.

Step S44 checks the same thing as step S36,that is,whether the origin of the work pattern (Dx,Dy) is already out of the destination area.If the origin is not out of the destination area,step S42 is carried out again.Otherwise,the origin (Dx,Dy) is changed to position another work pattern below,and then,another origin (Sx,Sy) is also changed to assure the continuity of the pattern.In other words,changing the origin (Sx,Sy) is adjusting the position slightly so as to continue the pattern between two adjucent work pattern.

Then,step S46 checks whether Dy is outside the destination area.This is the process to check whether the whole destination area is painted out with the pattern.If Dyis inside the destination area,step S40 is carried out again.Otherwise,the whole processes come to an end.

Of course,this invention is by no means limited to the embodiment cescribed above.Now,the second embodiment of this invention is to be described.

Fig.10(a) and(b) are flow charts of the second embodiment.Fig.10(a) shows the outline of the process to make a parameter table.this process is shown in Fig.11 in detail,and the parameter table itself is shown in Fig.12.

Fig.10(b) shows the outline of the process to paste a figure with a pattern.

Fig.11 shows the detailed flow chart of step S51 shown in Fig.10(a).Fig.12 also shows the visual image of the process coressponding to the step S51.

The detailed flow chart of step S51 is consisted of twelve steps from step S61 to step S72.

Step S61 finds a parameter named max.This max is the maximum acceptable width of the input pattern cell with a pattern.This max is dependant on whether the memory of the calculator or processor is acceptable the former cell with the pattern.

Step S62 finds another parameter named limit.This limit is the maximum width of the other cell to paste a figure to paste the figure.So,this parameter limit is also dependant on whether the memory of the calculator or processor is acceptable the cell to paste a figure with the pattern.

Step S63 sets the parameter i as 1.This parameter i shows the width of the input pattern cell.

Step S63 sets the parameter i as the initial value 1.This parameter i shows, in general, the width of the input pattern cell.

Then,step S64 checks whether the value of the i is larger than max or not.If the value of i is larger,- ("N" direction in Fig.11) the input pattern cell itself pastes the figure,but in general, initial value of i is not as large as the max.

Then, step S65 sets the value of the parameter $\theta$ as 5 degree.In this invention,5 degree is no more than an example for description.

Step S66 checks whether the value of the $\theta$ is larger than 90 degree.If the value of the $\theta$ is larger,step S72 adds 1 to the value of the i.$\theta \geq 90$ indicates over rotation.This over rotation occurs when the i,that is,the width of the input pattern cell is too small to show theperiodity of the pattern.The reason why the over rotation indicates thatthe input pattern cell is too small will be described later.

When step S66 found that $\theta<90$,step S67 calculates periodity cl and approximate value $\theta'$.These cl and $\theta'$ indicates the sameconcepts as cited in the description of the first embodiment,or Fig.3.However,Fig.13 shows another calculating method to find the value of $\theta'$.

Then, step S68 checks whether the periodity cl is larger than the LIMIT. In case periodity cl equals,or is larger than the LIMIT, the pair of the cl and $\theta'$ is ignored,because it is impossible to memorize the datas of input pattern cell to the computer.

Next,step S69 seeks the table of cl and $\theta'$,to see if the cl and $\theta'$ are already memorized in the table.

Fig.12 shows an example of the table.If the cl and $\theta'$ are already memorized in the table, the cl and $\theta'$ calculated in the step S67 are ignored.If the cl and $\theta'$ are not memorized yet,those calculated cl and $\theta'$ are memorized in step S70.

Next,step S71 adds 5 degee to the rotation degree, to calculate and find another cl and $\theta'$.

Fig.13 is a flow chart to show the process to determine suitable values of two parameters cl and $\theta$.This flow chart explains precise calculations of step S67 in Fig.11.

Step S81 and step S82 define two parameters,L and $\theta$.L is the width of the input pattern cell. $\theta$ is the rotation degree.Then, step S83 defines a parameter named LIMIT as the maximum value of the width of the figure to paste .

Step S84 seeks the table in Fig.12 to find pairs of the cland $\theta'$,which correspond to the width of input pateern cell L.Step S85 finds a residue system of $\theta$,having 90 as law.Actually, divide by 90,integralize the quotient by discarding.Then,mutiply 90 ,and reduce the product from the .This difference is regarded as $\theta'$.

Next,step S85 seeks the table again, to find a value of $\theta'$,which is the nearest value withthe value calculated in step S85.This step S85 is a step for resemblance.Actually, step S87 finds cl from the table,and step S88 restore the value of the $\theta'$,as it was calculated in the step S85.

Fig.14 shows a flow chart of the process that makes a pattern to paint out a certain figure.In other words,Fig.14 explains the precise process of step S53 cited in Fig.10.

Fig.15 shows the visual images of the Fig.14.

Step S91 makes a circumferential square S which circumscribes the rotated input pattern cell D.That makes an outline of the expanded pattern.Then,step S92 paste a patterninside the square to get an expanded pattern.These are shown in Fig.15(b) as a visual image. The work pattern applied with the input pattern cell is shown in Fig.15(c).Then,a periodical square of width cl is picked up from the expanded pattern.Picked up work pattern is shown in Fig.15(d).After picking up of the work pattern, step S93 rotates the work pattern by the $\theta'$ .

Although this embodiment described various cells as square,it is not limited to a square.with this method,a rectangle,a triangle,or some other figure can be applied.

## Claims

1. A method of pattern data rotation characterised by analysing a work pattern to determine a pattern periodicity therein that will replicate the pattern continuously upon rotation thereof through a particular angle, and reforming said work pattern with said pattern periodicity.

2. A method according to claim 1 including pasting a figure with the reformed work pattern whereby the figure is pasted with a continuous pattern rotated through said angle.

3. A rotation calculation method of a continuous pattern data characterised by finding periodicity of said pattern, making an expanded pattern cell circumscribing the work pattern with the width of said periodicity so as to paint out the area of the width of said periodicity, pasting said work pattern cells, arranging so as to keep continuity of the pattern, to paint out a figure with said pattern.

4. A rotation calculation method according to claim 3, wherein a table of the width of the work pattern and the rotation degree is memorised concerned with the pattern.

5. A system for pattern data rotation including processor means, data display means, and memory means containing data representative of a work pattern for display on said display means, said processor means being operative to analyse said work pattern to determine a pattern periodicity therein that will replicate the pattern continuously upon rotation thereof through a particular angle, and forming said work pattern rotated through said angle to be pasted to a figure displayed by said data display means.

Fig. 1

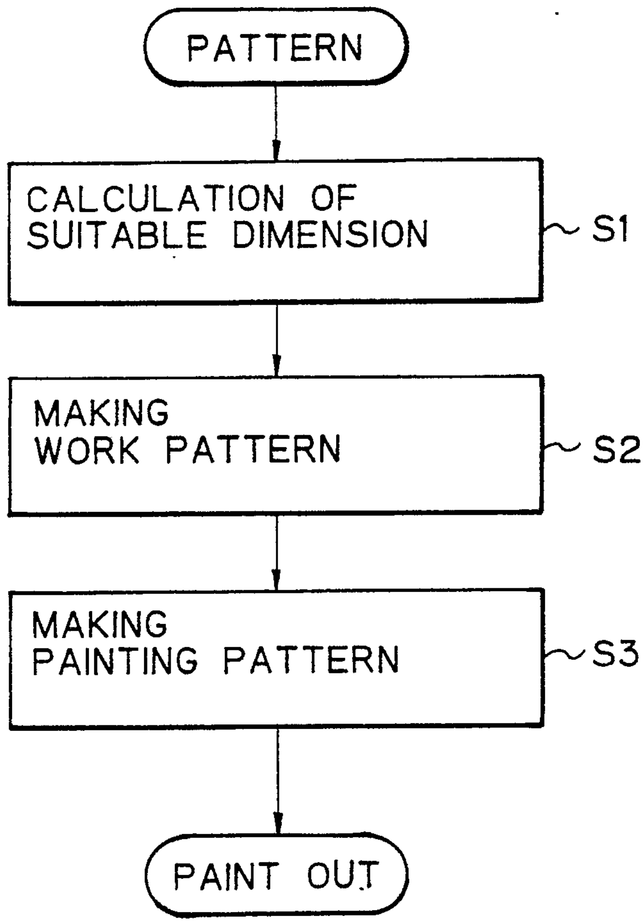
PATTERN
CALCULATION OF SUITABLE DIMENSION
S1
MAKING WORK PATTERN
S2
MAKING PAINTING PATTERN
S3
PAINT OUT

Fig. 2

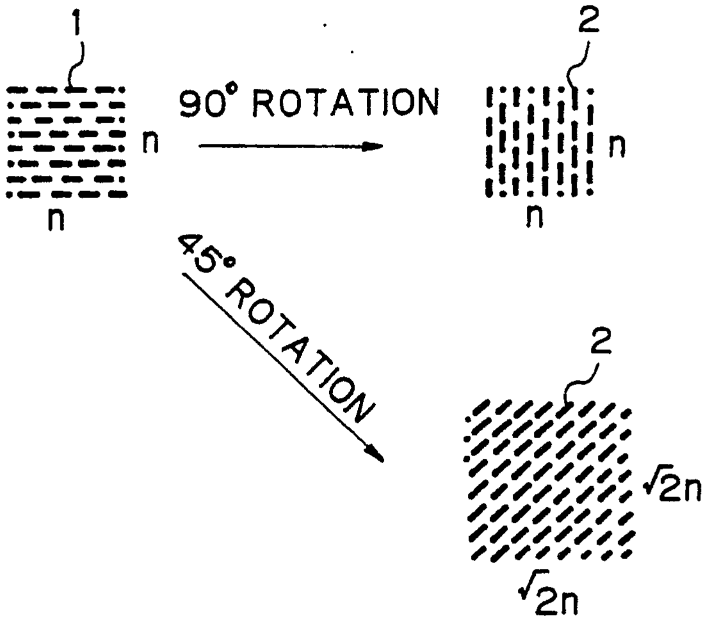

Fig. 3

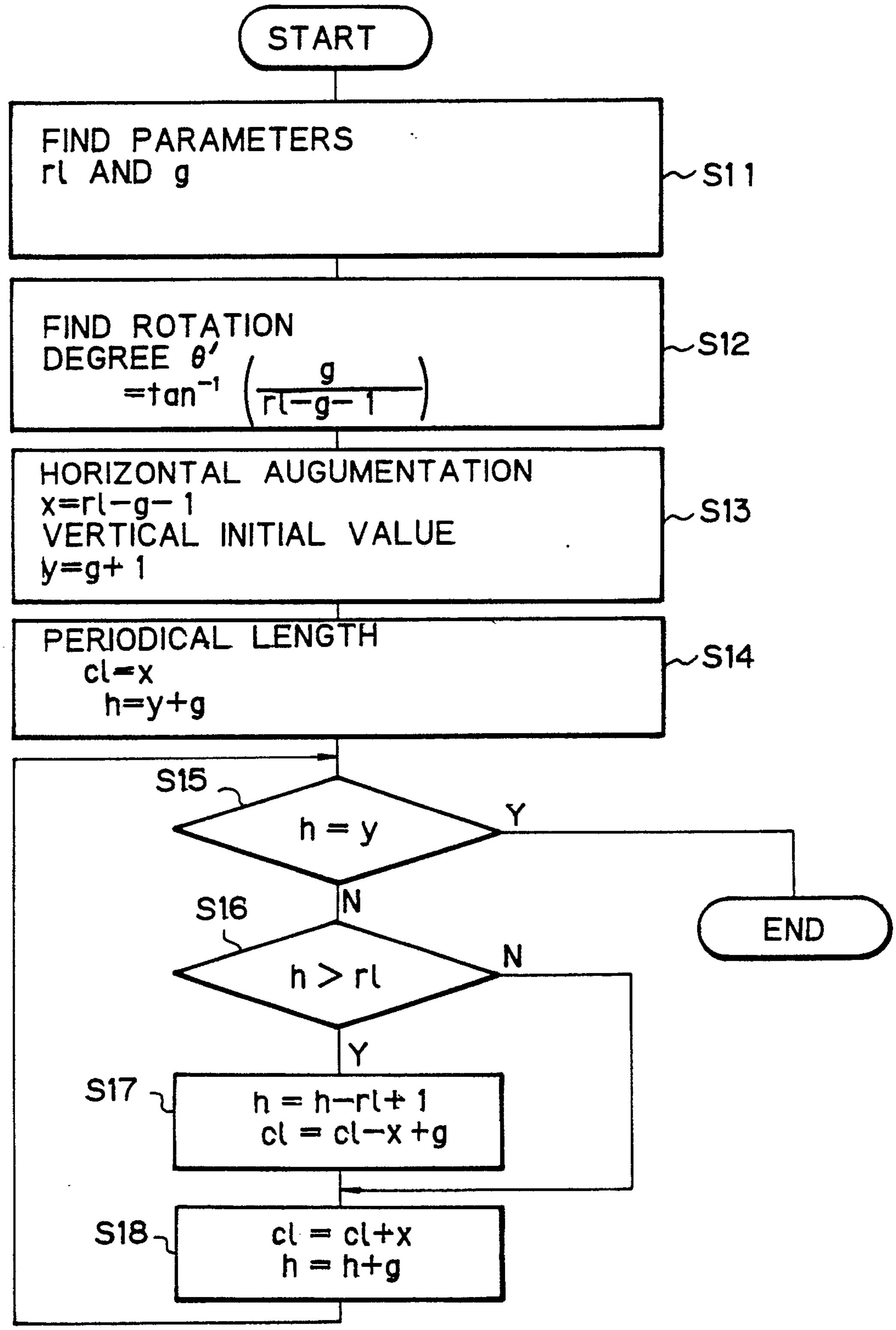
START
FIND PARAMETERS rl AND g
S11
FIND ROTATION DEGREE θ' =tan⁻¹ (g / rl−g−1)
S12
HORIZONTAL AUGUMENTATION x=rl−g−1
VERTICAL INITIAL VALUE y=g+1
S13
PERIODICAL LENGTH cl=x h=y+g
S14
S15
h = y
Y
END
N
S16
h > rl
N
Y
S17
h = h−rl+1 cl = cl−x+g
S18
cl = cl+x h = h+g

Fig. 4

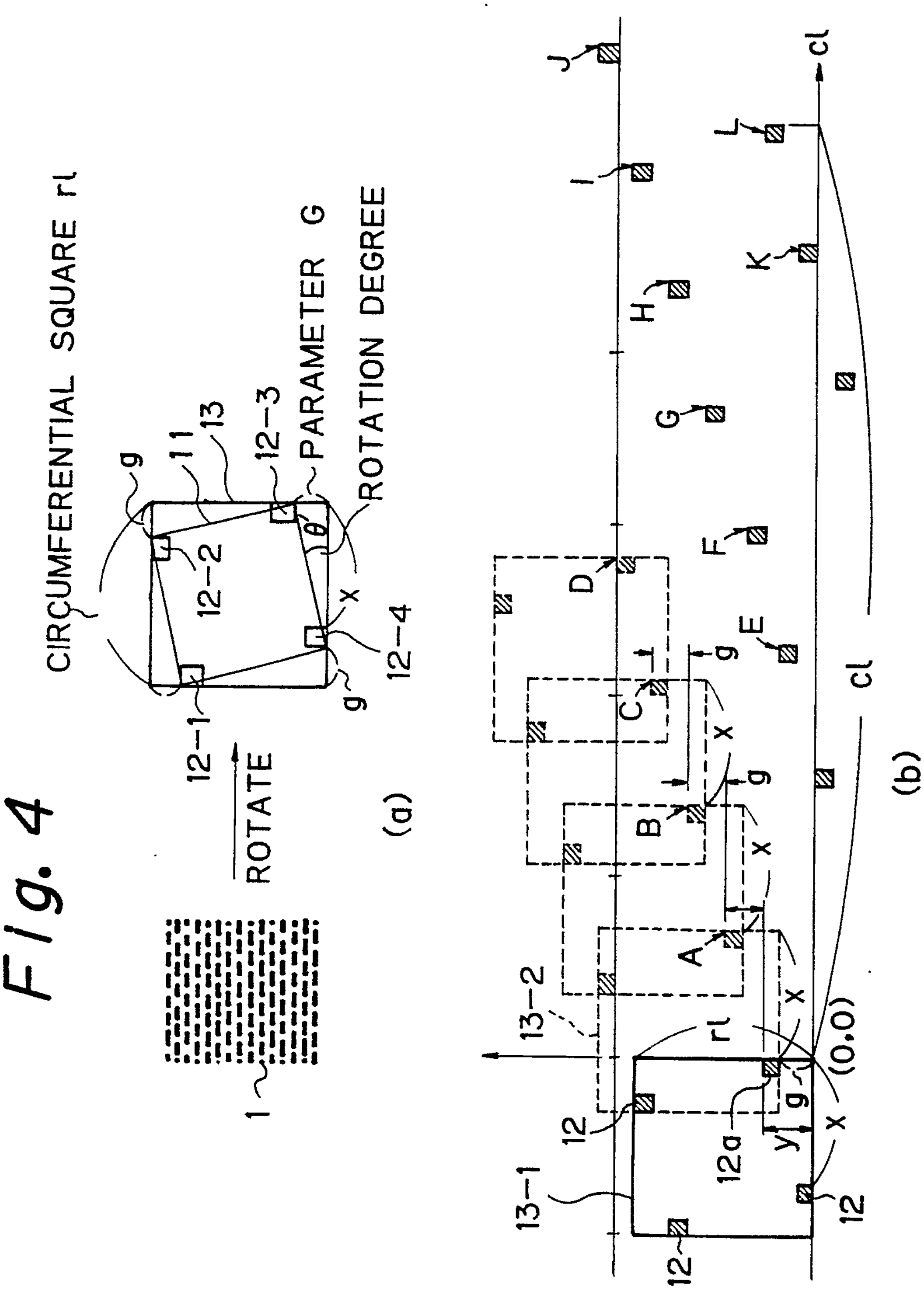
CIRCUMFERENTIAL SQUARE rl
PARAMETER G
ROTATION DEGREE
ROTATE
12-1
12-2
12-3
12-4
11
13
g
x
θ
1
(a)
13-1
13-2
12
12a
rl
y
(0,0)
A
B
C
D
E
F
G
H
I
J
K
L
cl
(b)

Fig. 5

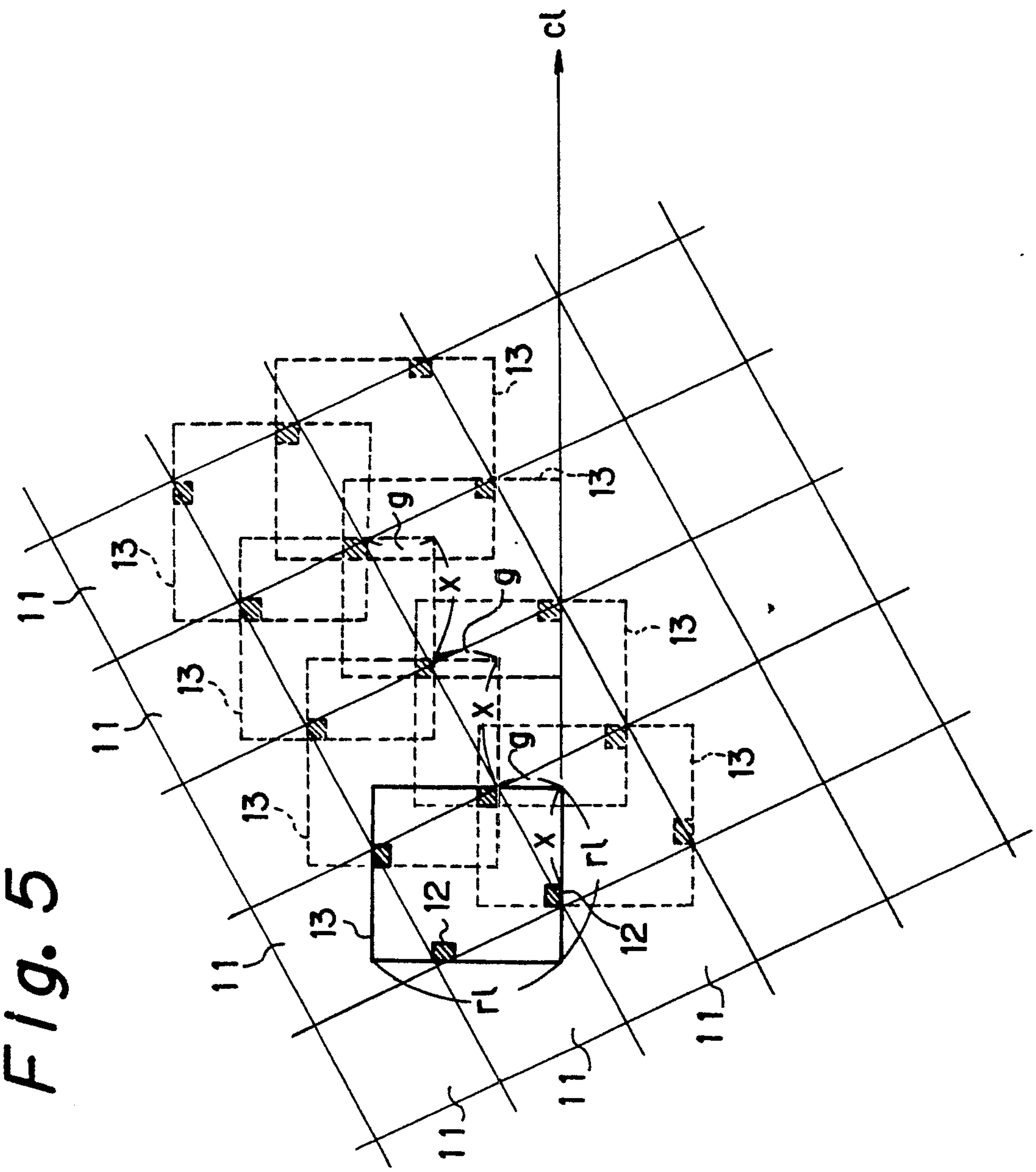

Fig. 6

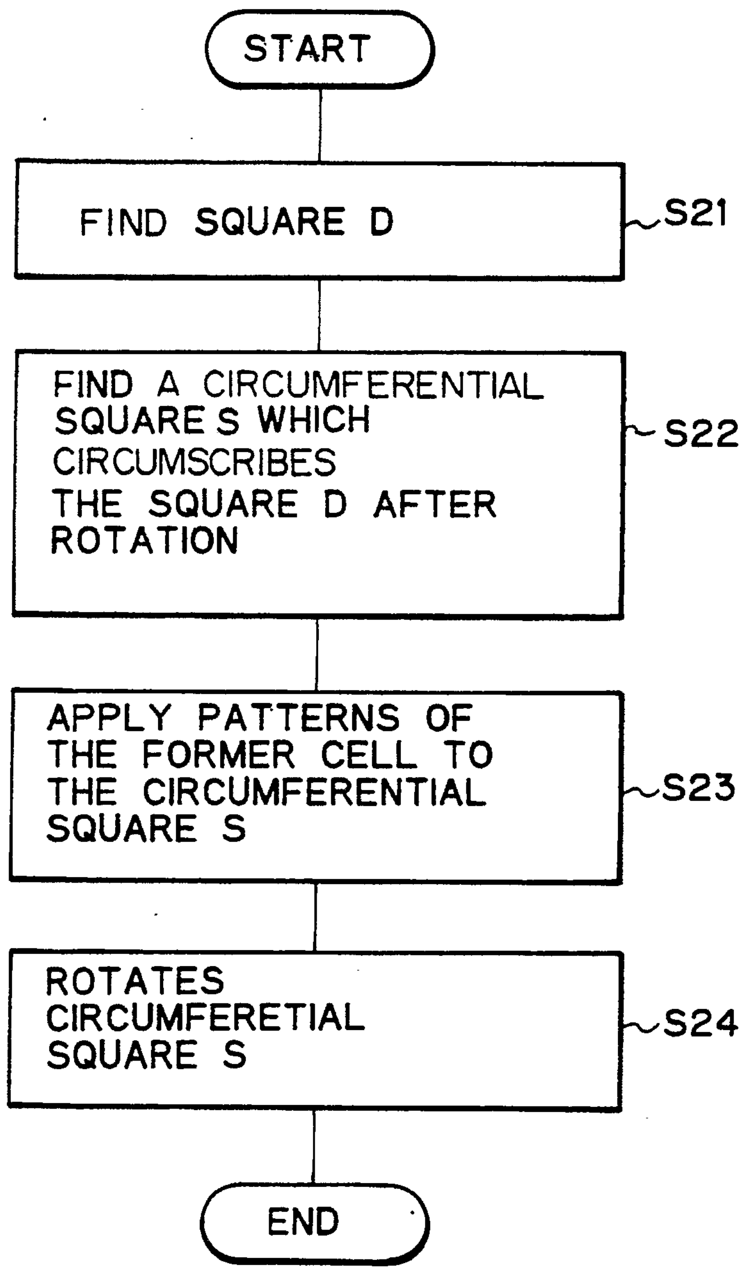
START
FIND SQUARE D
S21
FIND A CIRCUMFERENTIAL SQUARE S WHICH CIRCUMSCRIBES THE SQUARE D AFTER ROTATION
S22
APPLY PATTERNS OF THE FORMER CELL TO THE CIRCUMFERENTIAL SQUARE S
S23
ROTATES CIRCUMFERETIAL SQUARE S
S24
END

# FIg. 7

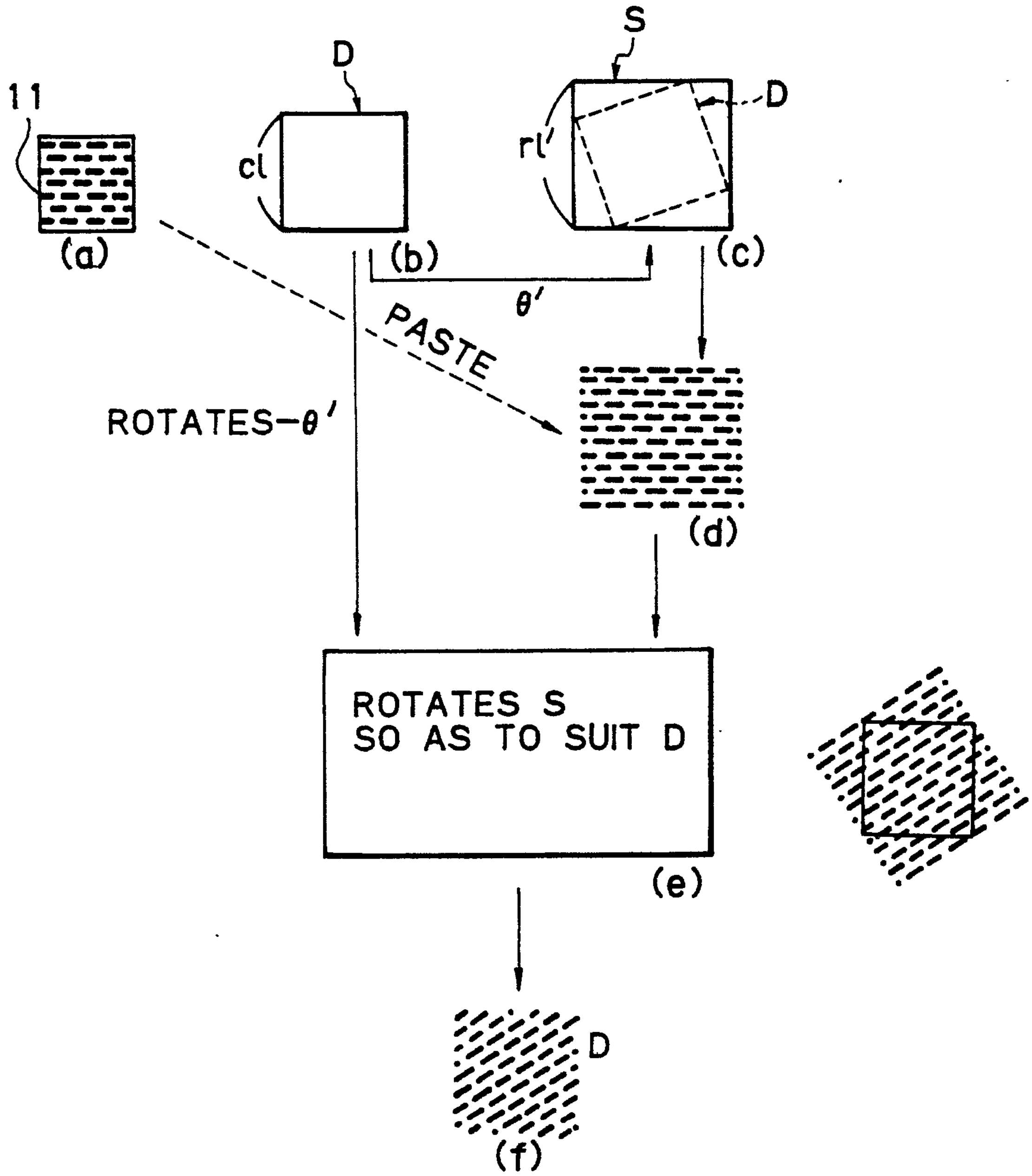

*Fig. 8A*

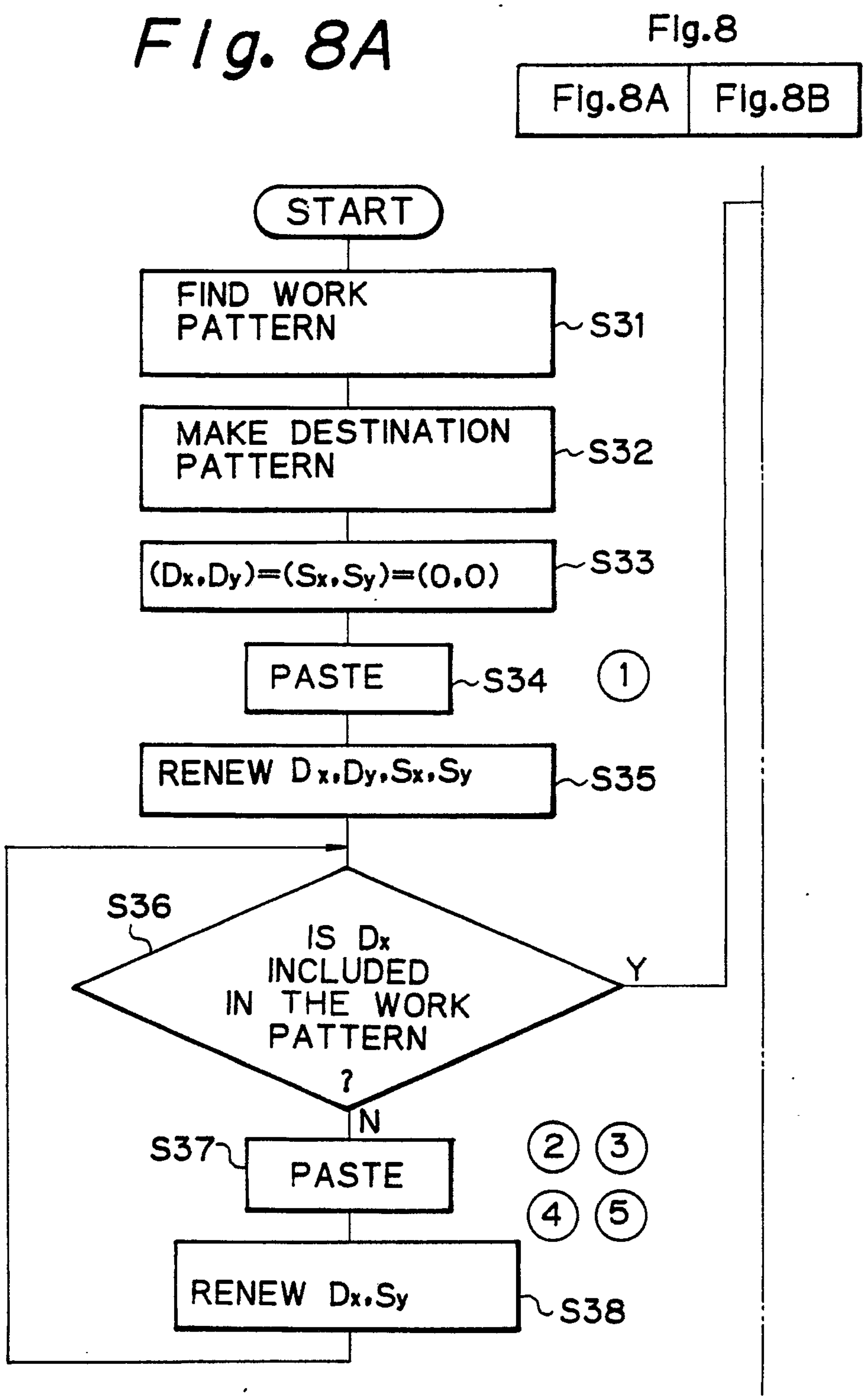
Fig.8
Fig.8A
Fig.8B
START
FIND WORK PATTERN
S31
MAKE DESTINATION PATTERN
S32
(Dx,Dy)=(Sx,Sy)=(0,0)
S33
PASTE
S34
1
RENEW Dx,Dy,Sx,Sy
S35
S36
IS Dx INCLUDED IN THE WORK PATTERN ?
Y
N
S37
PASTE
2
3
4
5
RENEW Dx,Sy
S38

Fig. 8B

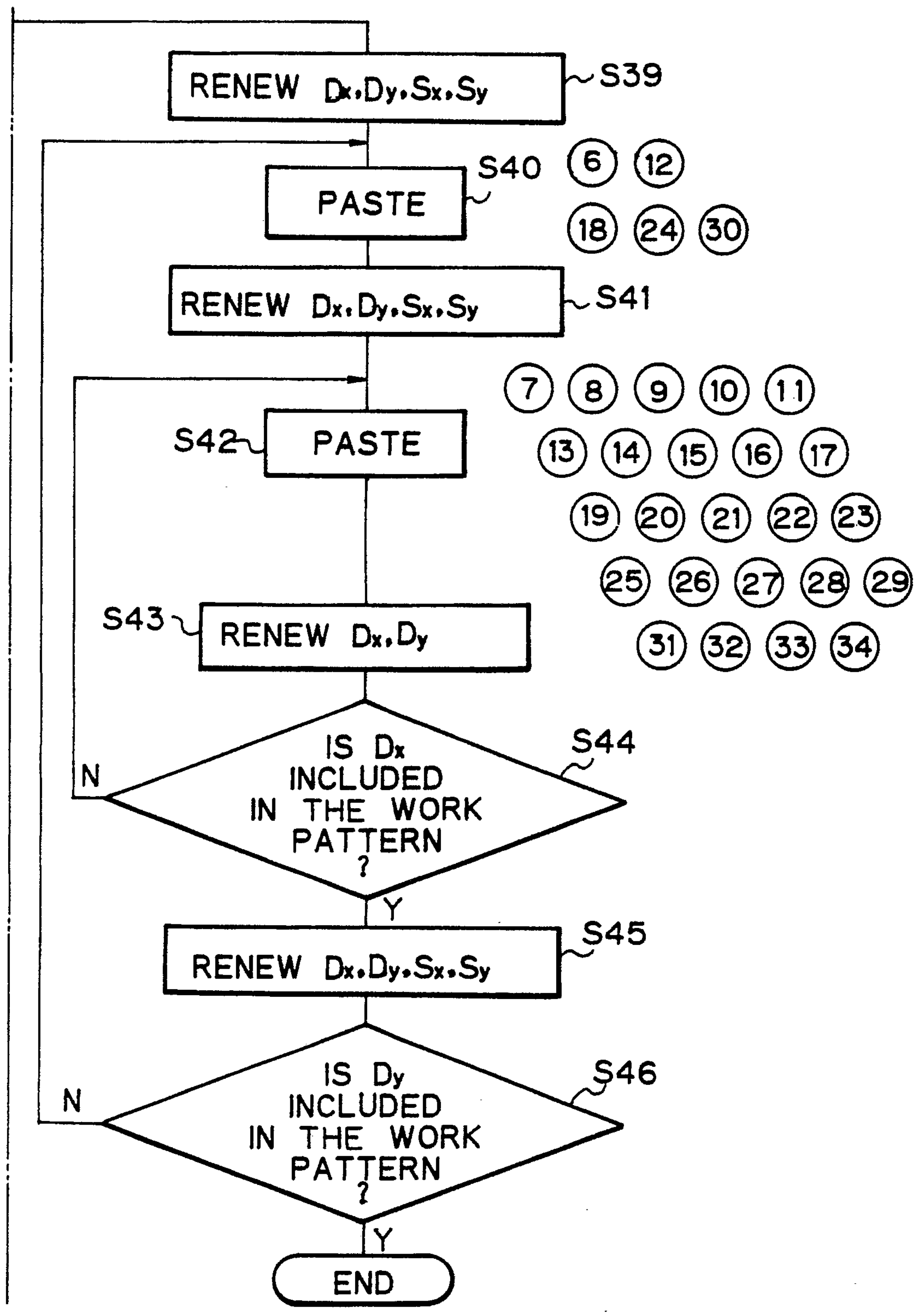
RENEW Dx,Dy,Sx,Sy
S39
PASTE
S40
⑥ ⑫
⑱ ㉔ ㉚
RENEW Dx,Dy,Sx,Sy
S41
⑦ ⑧ ⑨ ⑩ ⑪
⑬ ⑭ ⑮ ⑯ ⑰
⑲ ⑳ ㉑ ㉒ ㉓
㉕ ㉖ ㉗ ㉘ ㉙
㉛ ㉜ ㉝ ㉞
S42
PASTE
S43
RENEW Dx,Dy
IS Dx INCLUDED IN THE WORK PATTERN ?
S44
N
Y
RENEW Dx,Dy,Sx,Sy
S45
IS Dy INCLUDED IN THE WORK PATTERN ?
S46
N
Y
END

Fig. 9

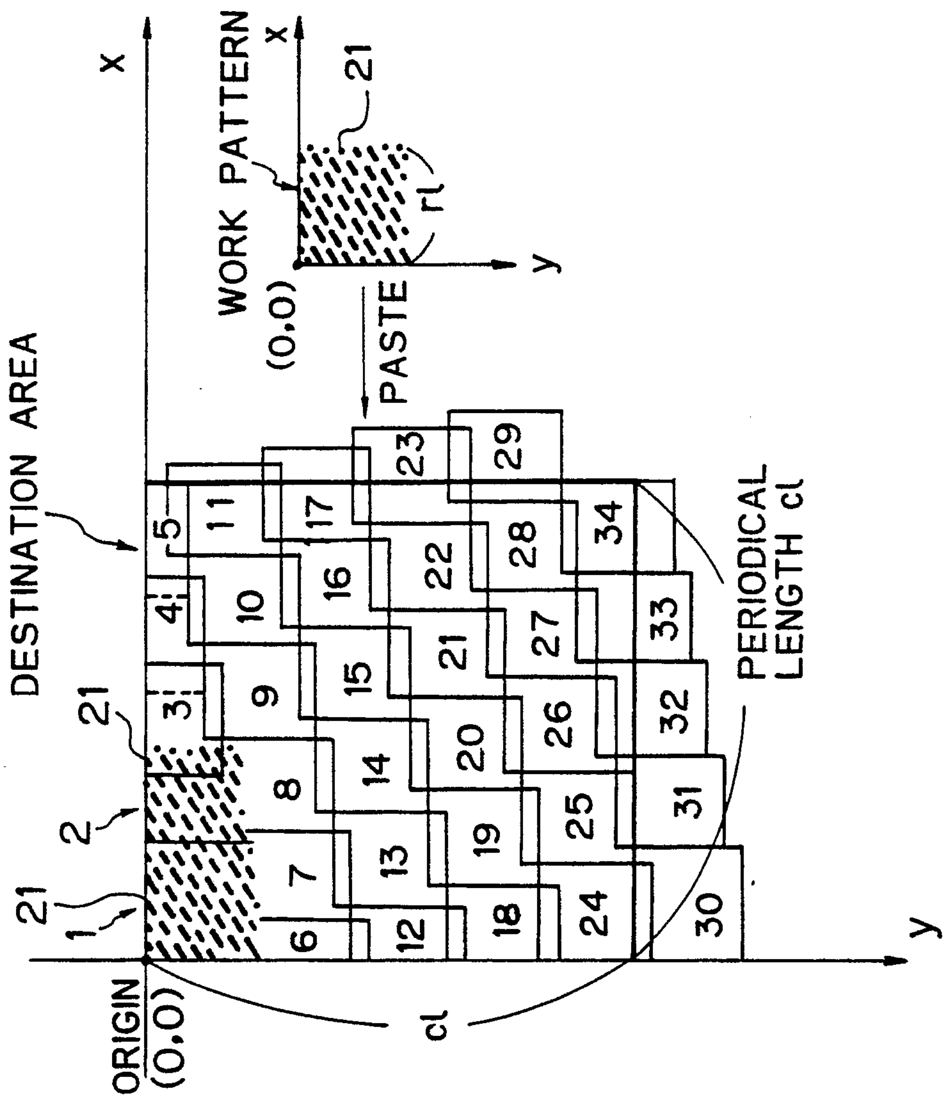
DESTINATION AREA
WORK PATTERN
PASTE
ORIGIN (0,0)
(0,0)
PERIODICAL LENGTH cl
cl
rl
x
y

Fig. 10

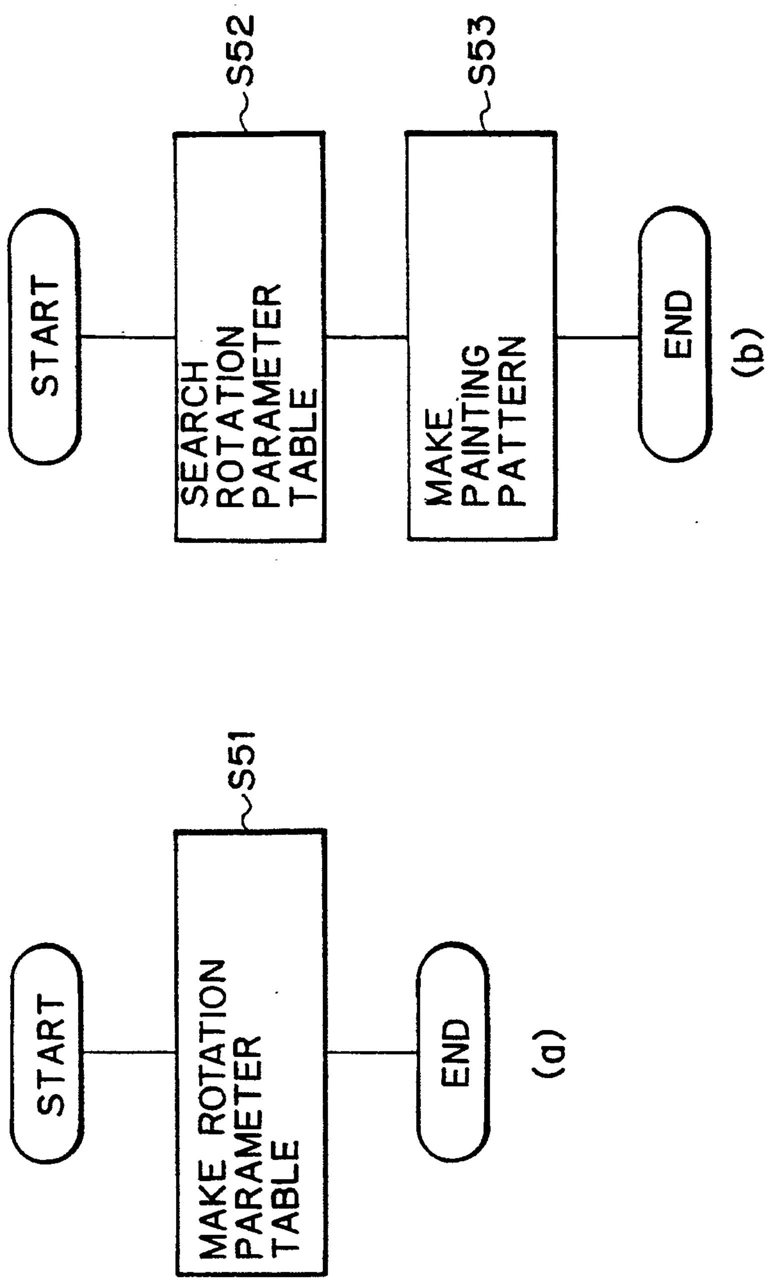
START
MAKE ROTATION PARAMETER TABLE
S51
END
(a)
START
SEARCH ROTATION PARAMETER TABLE
S52
MAKE PAINTING PATTERN
S53
END
(b)

Fig. 11

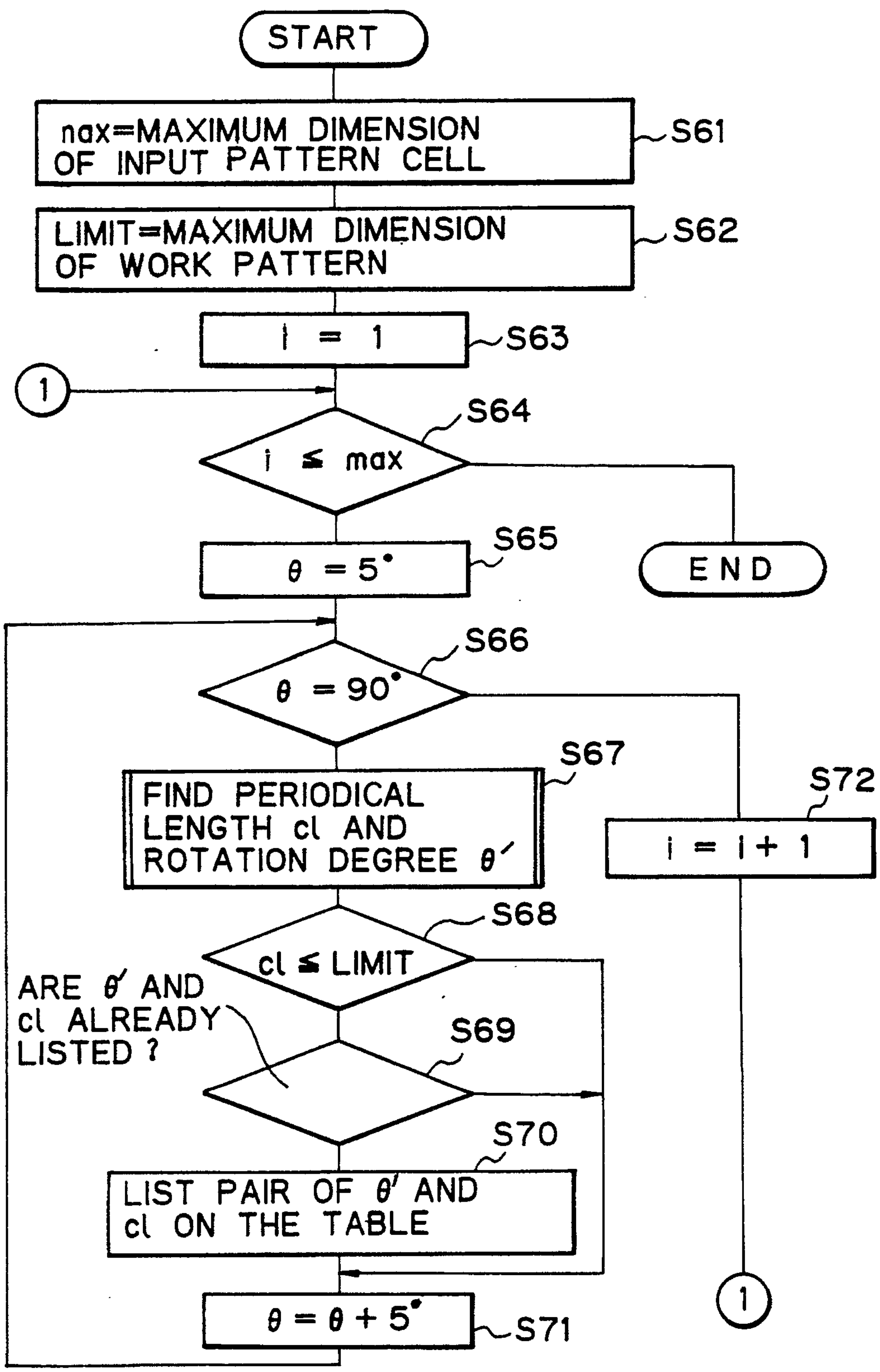
START
nax=MAXIMUM DIMENSION OF INPUT PATTERN CELL
S61
LIMIT=MAXIMUM DIMENSION OF WORK PATTERN
S62
i = 1
S63
1
S64
i ≤ max
S65
θ = 5°
END
S66
θ = 90°
S67
FIND PERIODICAL LENGTH cl AND ROTATION DEGREE θ′
S72
i = i + 1
S68
cl ≤ LIMIT
ARE θ′ AND cl ALREADY LISTED ?
S69
S70
LIST PAIR OF θ′ AND cl ON THE TABLE
θ = θ + 5°
S71
1

# Fig. 12

| | | | |
|---|---|---|---|
| WIDTH OF PATTERN | 8 | SUM | 11 |
| ROTATION DEGREE ($\theta'$) | 7 | PERIODICAL LENGTH (cl) | 65 |
| | 15 | | 53 |
| | 20 | | 73 |
| | 29 | | 65 |
| | 39 | | 61 |
| | 45 | | 11 |
| | 50 | | 61 |
| | 60 | | 65 |
| | 69 | | 73 |
| | 74 | | 53 |
| | 82 | | 65 |
| WIDTH OF PATTERN | 9 | SUM | 13 |

Fig. 13

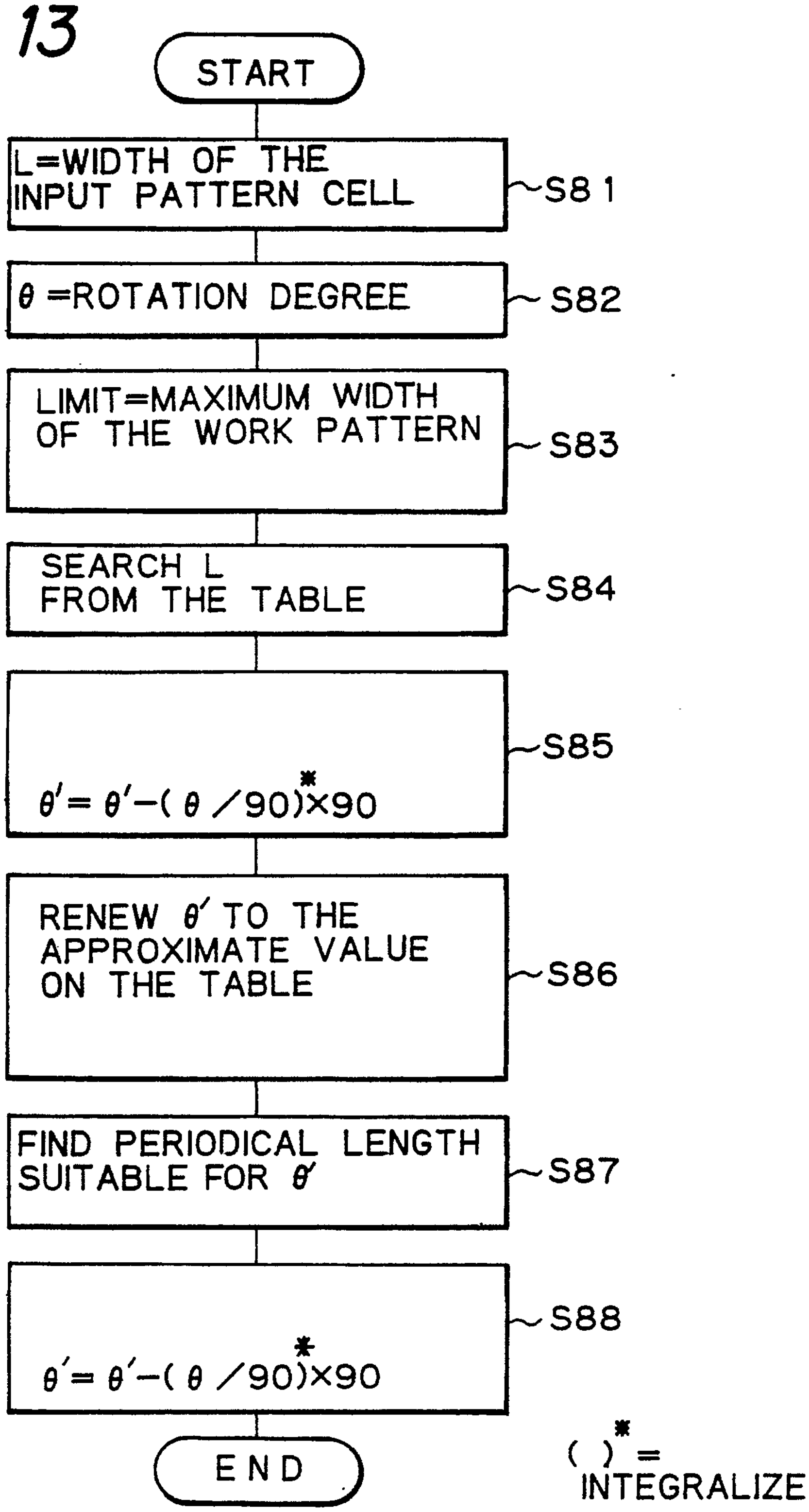
START
L=WIDTH OF THE INPUT PATTERN CELL
S81
θ =ROTATION DEGREE
S82
LIMIT=MAXIMUM WIDTH OF THE WORK PATTERN
S83
SEARCH L FROM THE TABLE
S84
θ'= θ'−( θ /90)* ×90
S85
RENEW θ' TO THE APPROXIMATE VALUE ON THE TABLE
S86
FIND PERIODICAL LENGTH SUITABLE FOR θ'
S87
θ'= θ'−( θ /90)* ×90
S88
END
( )* = INTEGRALIZE

Fig. 14

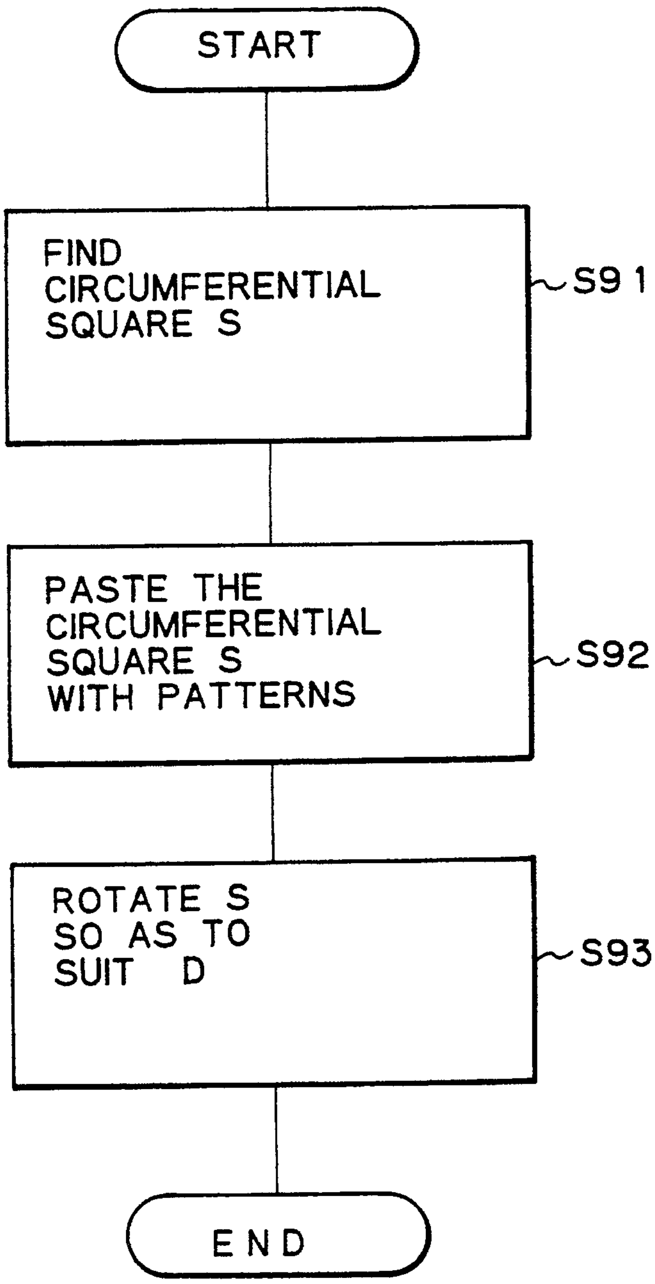
START
FIND CIRCUMFERENTIAL SQUARE S
S91
PASTE THE CIRCUMFERENTIAL SQUARE S WITH PATTERNS
S92
ROTATE S SO AS TO SUIT D
S93
END

Fig. 15

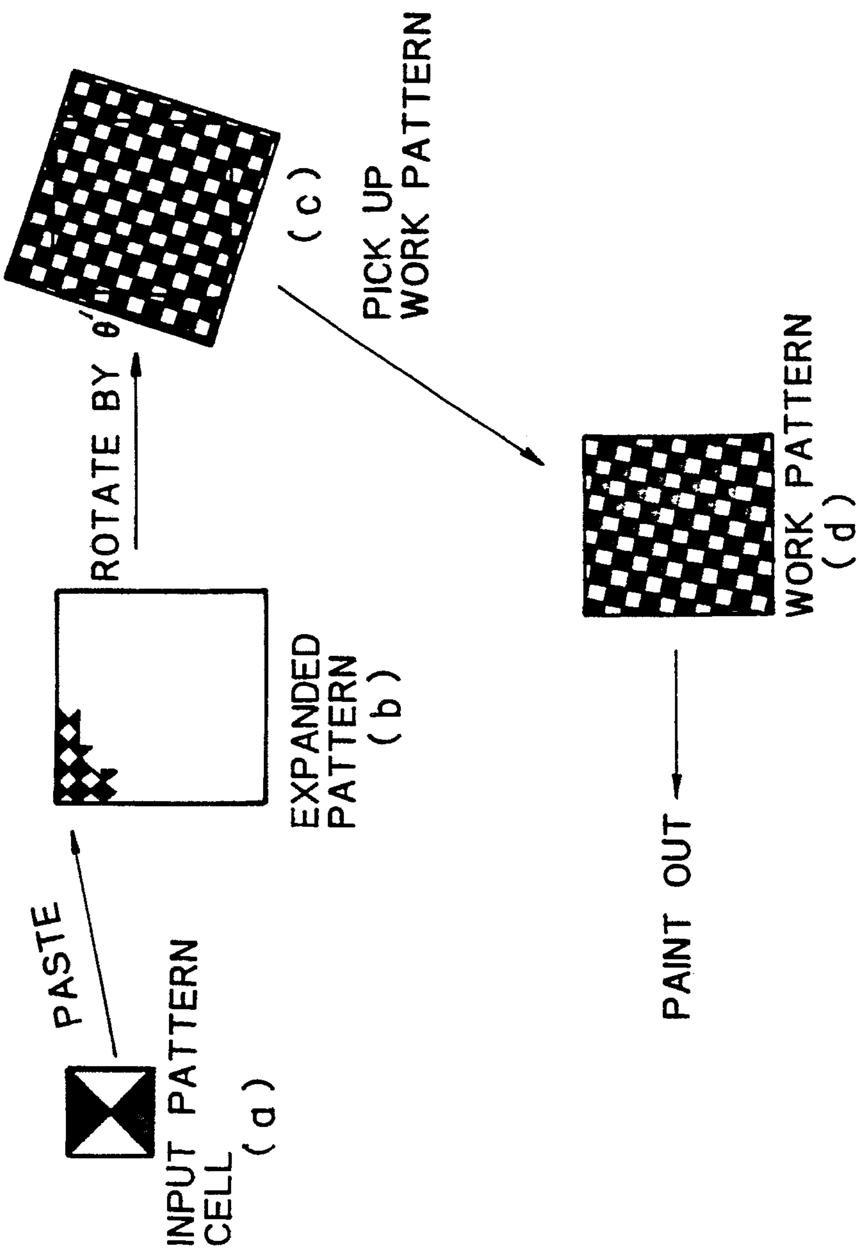
INPUT PATTERN
CELL
(a)
PASTE
EXPANDED
PATTERN
(b)
ROTATE BY θ'
(c)
PICK UP
WORK PATTERN
WORK PATTERN
(d)
PAINT OUT

Fig. 16

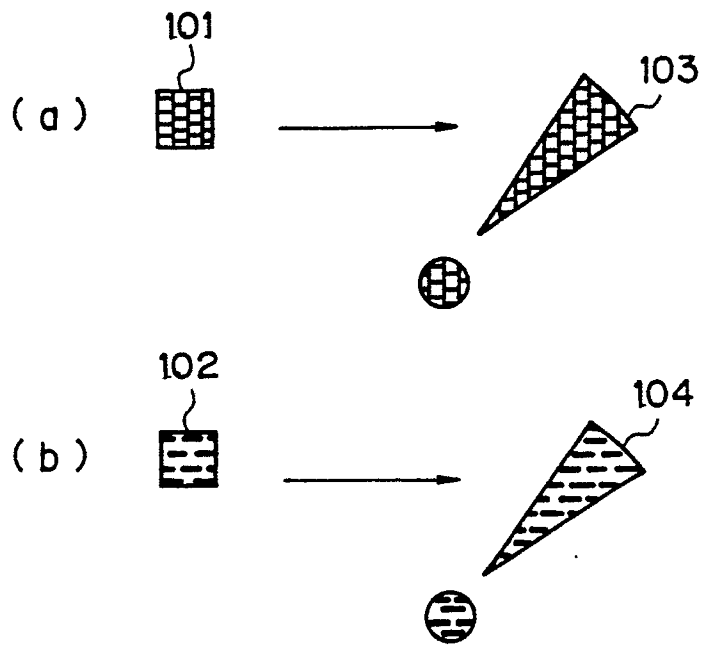


Fig. 17

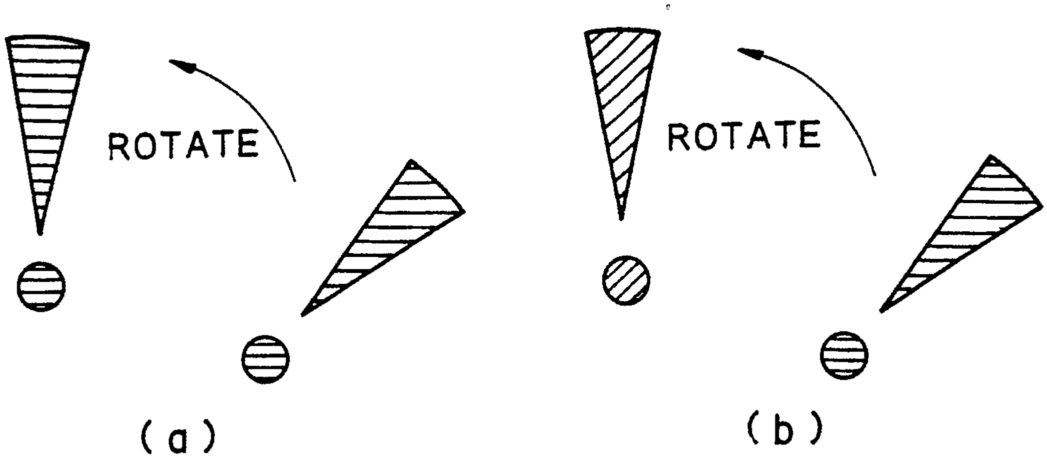

Fig. 18

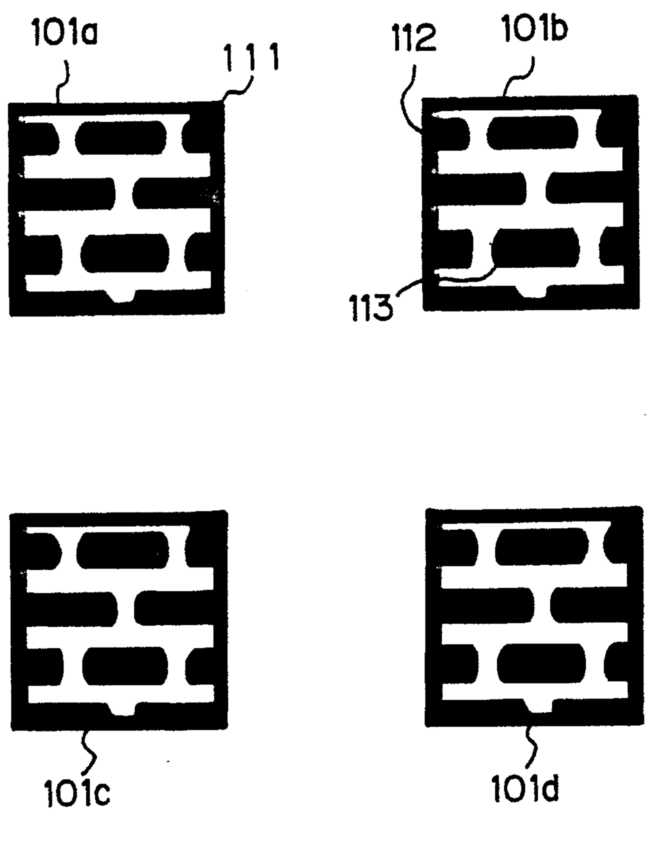

Fig. 19